# EUROPÄISCHE PATENTANMELDUNG

(11) **EP 0 955 788 A2**
(43) Veröffentlichungstag der Anmeldung: **10.11.1999**
(21) Anmeldenummer: 99440090.1
(22) Anmeldetag: 23.04.1999
(51) Int. Cl.: H04Q 11/04, H04L 29/06

(54) **Verfahren und Vorrichtungen zur Weiterleitungskontrolle von Paketen abgeschlossener Paketsequenzen paketvermittelter Netzwerke**

(30) Priorität: 08.05.1998 DE 19820525
(71) Anmelder: ALCATEL, 75008 Paris (FR)
(72) Erfinder: Schmitz, Bernhard, 71272 Renningen-Malmsheim (DE)
(74) Vertreter: Brose, Gerhard, Dipl.-Ing.

(57) **Zusammenfassung**

Die vorliegende Erfindung betrifft ein Verfahren zur Weiterleitungskontrolle von Paketen abgeschlossener Paketsequenzen paketvermittelter Netzwerke, sowie ein Softwaremodul, eine Schnittstelleneinrichtung, ein Endgerät und einen Server hierfür. In den Paketen der Paketsequenzen werden Informationen segmentweise transportiert. Es wird vorgeschlagen, daß die Berechtigung eines Paketes zur Weiterleitung geprüft wird, indem zumindest dann, wenn das Paket zum Anfang einer Paketsequenz (C11A, C12A, C13A) gehört, die transportierte Information des Paketes zum Vergleich mit einem Kriterium herangezogen wird, daß außer dem ersten Paket erforderlichenfalls weitere Pakete einer Paketsequenz vor der Weiterleitung solange geprüft werden, bis die transportierte Information so vollständig verfügbar ist, daß sie mit dem Kriterium vergleichbar ist, und daß ein Paket einer Paketsequenz weitergeleitet wird, wenn bei dem Vergleich festgestellt wurde, daß die Weiterleitung für das Paket erlaubt ist oder wenn bereits durch eine Prüfung eines vorangegangenen Paketes derselben Paketsequenz festgestellt worden ist, daß für die Pakete dieser Paketsequenz die Weiterleitung erlaubt ist.

## Beschreibung

Die vorliegende Erfindung betrifft ein Verfahren gemäß dem Oberbegriff des Anspruchs 1, sowie ein Softwaremodul gemäß dem Oberbegriff des Anspruchs 5 hierfür und eine Schnittstelleneinrichtung gemäß dem Oberbegriff des Anspruchs 6 hierfür, ein Endgerät gemäß dem Oberbegriff des Anspruchs 7 hierfür und einen Server hierfür gemäß dem Oberbegriff des Anspruchs 8.

Die zunehmende Vernetzung von Rechnern untereinander zu Rechnernetzwerken sowohl im lokalen Bereich in sogenannten Local Area Networks (LAN), im Weitverkehr in sogenannten Wide Area Networks (WAN) sowie auch weltweit über ATM-Netzwerke (Asynchronous Transfer Mode) und über das Internet erlaubt den Datenaustausch der Rechner untereinander in immer größerem Maße. Auf den genannten Netzwerken werden Daten in Datenpaketen ausgetauscht. Soweit die an dem Datenaustausch beteiligten Rechner den Datenaustausch von sich aus erlauben und steuern können, ist ein unproblematischer und von Kontrollen freier Datenaustausch vorteilhaft und wünschenswert. Meist jedoch ist es nicht gewollt, daß von jedem Rechner aus beliebig auf Daten anderer Rechner zugegriffen wird oder daß Daten an einen Rechner gesendet werden, die dieser Rechner nicht erhalten dürfte. Auch zur Vermeidung von überflüssigem Datenverkehr, z.B. aus Kostengründen oder auch aus Gründen der Belastung von Kommunikationsnetzen, kann es sinnvoll sein, den Datenaustausch zwischen einzelnen Rechnern untereinander zu verhindern.

Zur Kontrolle des Datenaustausches können innerhalb eines Rechners an der Schnittstelle zu einem der genannten Netzwerke Kontrollmechanismen eingebaut sein, die den Zugriff auf den Rechner sowie den Zugriff von dem Rechner aus auf andere Rechner überprüfen und gegebenenfalls verhindern. Solche Kontrollmechanismen werden als Firewall bezeichnet. Ein solcher Firewall wird üblicherweise auch an einer Schnittstelle zwischen unterschiedlichen Netzwerken eingesetzt, z.B. zwischen einem LAN und einem WAN. Dazu wird zumindest auf einer Seite der Schnittstelle, im obigen Beispiel zumeist auf der Seite des LANs, ein den Datenverkehr zwischen den Netzwerken kontrollierender Rechner eingesetzt. Der Rechner kontrolliert dann den Datenverkehr von oder zu dem LAN und verhindert auf diese Weise, daß z.B. auswärtige Rechner auf an das LAN angeschlossene Rechner unberechtigterweise zugreifen oder daß die Rechner des LANs unerlaubt mit Kommunikationspartnern außerhalb des LANs kommunizieren.

Im einfachsten Fall kontrolliert ein Firewall die zwischen zwei Kommunikationspartnern ausgetauschten Nachrichten nur anhand von in den Paketen angegebenen Adressen der Kommunikationspartner. Nur wenn zwischen diesen Adressen ein Datenverkehr erlaubt ist, wird eine Nachricht eines dieser Kommunikationspartner an den jeweils anderen Kommunikationspartner weitergeleitet. Anspruchsvollere Ausführungen eines Firewalls kontrollieren über die Adressen hinaus auch jeweils die in den Nachrichten transportierten Informationen, also die sogenannte Applikationsebene oder Nutzdatenebene der Nachrichten. Eine solche inhaltliche Prüfung aller Nachrichten ist jedoch sehr aufwendig und erfordert leistungsfähige Rechner als Plattform für den Firewall, wenn durch die Kontrolle der Datenverkehr nicht behindert werden soll.

Bei den vorgenannten Prüfungen wird davon ausgegangen, daß eine Nachricht zur Überprüfung jeweils vollständig vorliegt, d.h. daß die Nachricht z.B. aus einem vollständigen Adressteil und vollständigen Nutzdatenteil besteht, so daß jede Nachricht für sich überprüft werden kann. Dies ist insbesondere dann möglich, wenn zum Transport der Nachricht ein Protokoll aus der Familie der sogenannten Internet Protokolle (IP) eingesetzt wird, weil dann jeweils vollständige Nachrichten variabler Länge versendet werden können, die abhängig von der in einer Nachricht jeweils zu transportierenden Datenmenge gebildet werden.

Sind größere Datenmengen zu versenden, werden Daten segmentiert und auf verschiedene Nachrichten verteilt. Anhand von Sequenzkennungen in den einzelnen Nachrichten können die segmentierten Daten aus den Nachrichten in der richtigen Reihenfolge entnommen und wieder in die ursprüngliche Form gebracht werden. Solche Sequenzkennungen bietet z.B. das Internet Protokoll Transmission Control Protocol (TCP). Nachrichten, die mit dem Transmission Control Protocol übertragen werden, enthalten sowohl die Steuerungsinformationen des TCP, den sogenannten TCP-Header, als auch die Steuerungsinformationen des IP, den sogenannten IP-Header. Auch bei Segmentierung der Daten auf mehrere Nachrichten hat jede der mit dem TCP-Protokoll versandten Nachrichten eine vollständige Steuerungsinformation, einen sogenannten Header, so daß ein Firewall bei jeder dieser Nachrichten die in den Headern genannten Adressen untersuchen und dabei feststellen kann, ob eine Weiterleitung der jeweiligen Nachricht erlaubt ist.

Insbesondere im Weitverkehrsbereich werden häufig Netzwerkprotokolle eingesetzt, bei denen die Datenpakete auf eine vorgegebene Länge festgelegt sind. Ein typisches Beispiel sind ATM-Netzwerke, die in Wide Area Networks , zunehmend auch in Local Area Networks zum Einsatz kommen. Die in ATM-Netzwerken gebräuchlichen Datenpakete haben stets die gleiche Länge und werden ATM-Zellen genannt. Wenn nun eine Nachricht, die mit Hilfe eines IP-Protokolles gebildet wurde, auf einem ATM-Netzwerk übertragen werden soll, so muß diese Nachricht in vielen Fällen wegen ihrer Länge auf mehrere ATM-Zellen einer ATM-Zellsequenz in Segmenten verteilt werden. Mittels geeigneter Kennungen im Steuerungsteil der ATM-Zellen der Sequenz, kann die in diesen Zellen transportierte ursprüngliche Nachricht wiederhergestellt werden. Wenn nun eine solche ATM-Zellsequenz durch einen Firewall kontrolliert werden soll, so muß zunächst die in der Zellsequenz enthaltene Nachricht, z.B. die erwähnte IP-Nachricht, wiederhergestellt werden, bevor überprüft werden kann, ob diese Nachricht den Firewall passieren darf oder zurückgewiesen werden muß. Die ATM-Zellsequenz kann erst nach dieser inhaltlichen Überprüfung gegebenenfalls über den Firewall hinweg weiterversendet werden. Dadurch wird die Geschwindigkeit der Datenübertragung erheblich verringert.

Aufgabe der Erfindung ist es, auf eine effiziente Weise Pakete abgeschlossener Paketsequenzen vor einer eventuellen Weiterleitung zu kontrollieren.

Diese Aufgabe wird durch ein Verfahren gemäß der technischen Lehre des Anspruchs 1, ein Softwaremodul gemäß der technischen Lehre des Anspruchs 5 und eine Schnittstelleneinrichtung gemäß der technischen Lehre des Anspruchs 6, ein Endgerät der technischen Lehre des Anspruchs 7 und einen Server der technischen Lehre des Anspruchs 8 gelöst. Weitere vorteilhafte Ausgestaltungen der Erfindung sind den abhängigen Ansprüchen und der Beschreibung zu entnehmen.

Bei manchen der bekannten Paketfiltertechniken werden zur Steigerung der Effizienz bei der Kontrolle nur die ersten Pakete, die zum Aufbau einer Kommunikationsbeziehung versandt werden, durch einen Firewall inhaltlich untersucht, um festzustellen, ob eine Kommunikationsbeziehung an sich erlaubt ist. Alle weiteren Pakete dieser Kommunikationsbeziehung werden anschließend durch den Firewall lediglich einer einfachen Adressprüfung, also einer Prüfung der in den Datenpaketen angegebenen Adresse unterzogen. Dadurch ist es jedoch möglich, daß im Rahmen einer einmal zugelassenen Kommunikationsbeziehung in Form einzelner Nachrichten oder in Form von Nachrichtensequenzen versandte Daten ungeprüft ausgetauscht werden, obwohl diese Daten eigentlich nicht ausgetauscht werden sollten. Wie im folgenden erläutert wird, läßt die vorliegende Erfindung keine solche Sicherheitslücke offen und sorgt trotzdem für einen zügigen Datenverkehr.

Im folgenden werden die Erfindung und ihre Vorteile anhand eines Ausführungsbeispiels unter Zuhilfenahme der Zeichnungen dargestellt.
- Figur 1: zeigt eine Anordnung zur Ausführung des erfindungsgemäßen Verfahrens mit einem Übertragungsweg TRANS, einer Kontrollvorrichtung CHECK und einer ersten Paketsequenz C11A, C12A und C13A, einer zweiten Paketsequenz C21A, C22A und C23A und einem ersten Paket C11B einer dritten Paketsequenz.
- Figur 2: zeigt eine Anordnung zur Ausführung des erfindungsgemäßen Verfahrens mit einem Übertragungsweg TRANS, einer Kontrollvorrichtung CHECK, einem ersten Netzwerk NW1 und einem zweiten Netzwerk NW2.

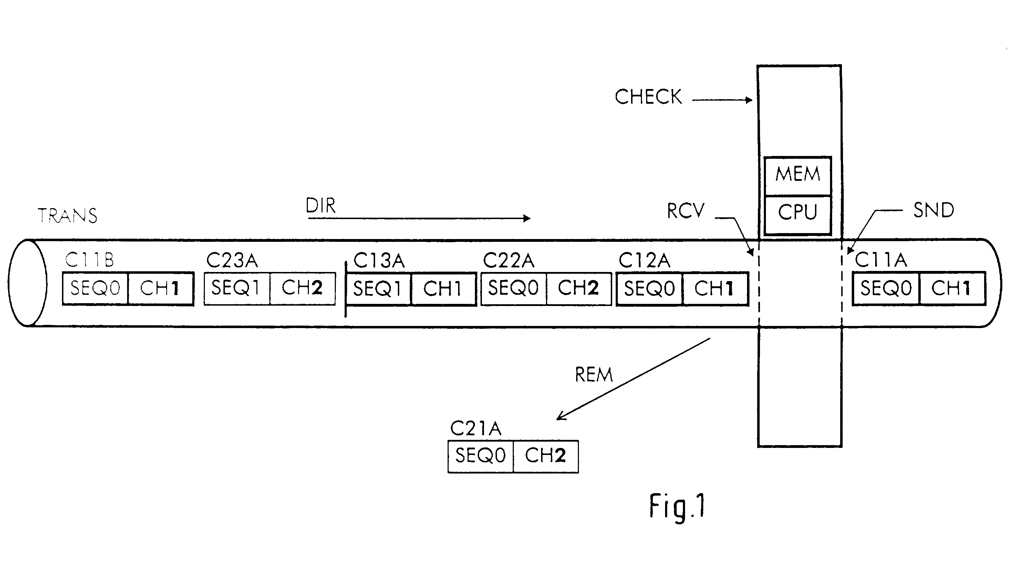

In Figur 1 ist eine Anordnung dargestellt, anhand derer sich das erfindungsgemäße Verfahren beispielhaft darstellen läßt. Ein Übertragungsweg TRANS, auf dem Datenpakete übertragen werden, führt über eine Kontrollvorrichtung CHECK. Die Kontrollvorrichtung CHECK verfügt über eine Eingangsschnittstelle RCV zu dem Übertragungsweg TRANS, auf dem sie Datenpakete von dem Übertragungsweg TRANS empfangen kann, und über eine Ausgangsschnittstelle SND, über die sie Datenpakete auf dem Übertragungsweg TRANS weitersenden kann. Als Datenpakete in Figur 1 seien zunächst beispielhaft die auf dem Übertragungsweg TRANS transportierten Datenpakete C11A, C12A und C13A genannt, die eine erste Paketsequenz bilden. Der Übertragungsweg TRANS kann z.B. eine Datenleitung eines Ethernet-Netzwerkes sein oder auch eine Datenleitung eines ATM-Netzwerkes. Die Kontrollvorrichtung CHECK empfängt an der Eingangsschnittstelle RCV jeweils ein Datenpaket, überprüft das Datenpaket und entscheidet je nach Ergebnis der Überprüfung, ob das Datenpaket von der Ausgangsschnittstelle SND weiterversendet, also auf dem Übertragungsweg TRANS weitergeleitet werden darf oder aus dem Strom der Datenpakete entfernt werden muß. Als ein Beispiel für ein solches aus dem Strom der Datenpakete entferntes Datenpaket ist in Figur 1 ein Datenpaket C21A dargestellt, das sich nicht mehr auf dem Übertragungsweg TRANS befindet. Der Vorgang des Entfernens durch die Kontrollvorrichtung CHECK ist durch einen Pfeil REM verdeutlicht.

Die Kontrollvorrichtung CHECK kann z.B. eine Schnittstelleneinrichtung eines Personal Computers sein, mit der der Personal Computer an ein Netzwerk angeschlossen ist. Eine solche Schnittstelleneinrichtung enthält eine Eingangsschnittstelle RCV zu dem Netzwerk, eine Ausgangsschnittstelle SND zu dem Personal Computer, ein Speichermittel MEM und ein Steuermittel CPU, das in dem Speichermittel gespeicherte Programme ausführen kann. Innerhalb der Kontrollvorrichtung CHECK sind die Eingangsschnittstelle RCV, die Ausgangsschnittstelle SND, das Speichermittel MEM und das Steuermittel CPU durch in Figur 1 aus Gründen der Übersichtlichkeit nicht dargestellte Verbindungen miteinander verbunden. Die Funktion der genannten Bestandteile der Kontrollvorrichtung CHECK wird weiter unten näher beschrieben.

Es ist jedoch auch möglich, daß ein Endgerät die Funktionen der Kontrollvorrichtung CHECK ausführt. Die Eingangsschnittstelle RCV, die Ausgangsschnittstelle SND, das Speichermittel MEM und das Steuermittel CPU können z.B. Betriebsmittel sein, die in einem Personal Computer ohnehin vorhanden sind.

Auf dem Übertragungsweg TRANS werden Datenpakete in einer durch einen Pfeil angedeuteten Flußrichtung DIR übertragen. Da das erfindungsgemäße Verfahren sowohl in der Flußrichtung DIR als auch analog in der Gegenrichtung angewendet werden kann, wird zur Vereinfachung der Darstellung im folgenden nur die Anwendung des Verfahrens in Flußrichtung DIR beschrieben. Auf dem in Figur 1 dargestellten Übertragungsweg TRANS können Daten auf mehreren Übertragungskanälen übertragen werden. Ein solcher Übertragungskanal besteht jeweils zwischen einer in Figur 1 nicht dargestellten Quelle, die Datenpakete in Flußrichtung DIR versendet und einem ebenfalls nicht dargestellten Ziel, das Datenpakete über den Übertragungsweg TRANS empfängt. Wenn der Übertragungsweg TRANS eine Datenleitung eines Ethernet-Netzwerkes ist, kann die Kontrollvorrichtung CHECK einen solchen Übertragungskanal anhand einer Zieladresse erkennen, die in den Datenpaketen angegeben wird. Ist der Übertragungsweg TRANS eine Datenleitung eines ATM-Netzwerkes, wird ein Übertragungskanal als ein sogenannter virtueller Kanal definiert und kann anhand einer VPI/VCI-Kennung (Virtual Path Identifier / Virtual Channel Identifier) in den Datenpaketen festgestellt werden. Auch wenn in einer besonders einfachen Ausführungsform des Übertragungsweges TRANS keine unterschiedlichen Übertragungskanäle vorhanden sind, kann das erfindungsgemäße Verfahren angewandt werden. Da jedoch in der Praxis der Übertragungsweg TRANS oft eine Datenleitung eines Ethernet-Netzwerkes oder eines ATM-Netzwerkes ist, wird im folgenden auf eine Ausführungsform mit mehreren Übertragungskanälen eingegangen.

In Figur 1 ist neben der bereits erwähnten Paketsequenz C11A, C12A und C13A auch eine zweite Paketsequenz C21A, C22A und C23A dargestellt. Von einer dritten Paketsequenz ist nur ein Datenpaket C11B gezeigt. Die Datenpakete können jeweils einem Übertragungskanal und auf einem solchen Übertragungskanal jeweils einer Paketsequenz zugeordnet werden, indem jeweils eine Kanalkennung CH1 oder CH2 und eine Sequenzkennung SEQ0 oder SEQ1 ausgewertet wird, die in den Datenpaketen angegeben ist. Die Kanalkennung CH1 bzw. CH2 kann z.B. eine Zieladresse eines Internet Protokolles (IP) sein oder auch eine VPI/VCI-Kennung des in ATM-Netzwerken gebräuchlichen Protokolles. Die Paketsequenz C11A, C12A und C13A und die mit dem Datenpaket C11B beginnende Paketsequenz werden auf einem ersten Übertragungskanal übertragen und tragen deshalb die Kanalkennung CH1.

Die Paketsequenz C21A, C22A und C23A wird einem zweiten Übertragungskanal zugeordnet und ist mit der Kanalkennung CH2 versehen. Anhand der Sequenzkennungen SEQ0 und SEQ1 kann festgestellt werden, ob das jeweilige Datenpaket das Ende einer Paketsequenz markiert oder nicht. Nur das jeweils letzte Datenpaket einer Paketsequenz trägt die Sequenzkennung SEQ1. In Figur 1 sind solche Datenpakete die Datenpakete C13A und C23A. Alle anderen Datenpakete einer Paketsequenz haben die Sequenzkennung SEQ0.

Die Kontrollvorrichtung CHECK überprüft die auf dem Übertragungsweg TRANS übertragenen Datenpakete und entscheidet je nach Ergebnis der Überprüfung, ob die Datenpakete auf dem Übertragungsweg TRANS weitergeleitet werden oder aus dem Strom der Datenpakete entfernt werden müssen. Dazu empfängt die Kontrollvorrichtung CHECK zunächst an einer Eingangsschnittstelle RCV zu dem Übertragungsweg TRANS Datenpakete. Die Kontrollvorrichtung CHECK ordnet dann das jeweils empfangene Datenpaket einer Paketsequenz zu, indem sie die in dem Datenpaket angegebenen Kanalkennung und Sequenzkennung auswertet. Dazu wird das Datenpaket z.B. von der Eingangsschnittstelle RCV an das Speichermittel MEM weitergegeben und dort gespeichert, so daß das Steuermittel CPU durch Ausführung der erwähnten Programme aus dem Speichermittel MEM das Datenpaket untersuchen kann. In Figur 1 befindet sich z.B. das Datenpaket C12A unmittelbar vor der Eingangsschnittstelle RCV. Die Kontrollvorrichtung CHECK empfängt dort dieses Datenpaket und gruppiert es anhand Kanalkennung CH1 zunächst in eine Paketsequenz auf dem ersten Übertragungskanal ein. An der Sequenzkennung SEQ0 kann die Kontrollvorrichtung CHECK feststellen, daß das Datenpaket nicht das letzte Datenpaket einer Paketsequenz ist. Da die Kontrollvorrichtung CHECK bereits zuvor ein Datenpaket einer Paketsequenz mit der Kanalkennung CH1 auf dem ersten Übertragungskanal empfangen hat, nämlich das von der Kontrollvorrichtung CHECK schon auf dem Übertragungsweg TRANS weitergeleitete Datenpaket C11A, ordnet die Kontrollvorrichtung CHECK das Datenpaket C12A der Paketsequenz zu, zu der auch das Datenpaket C11A gehört. Das dem Datenpaket C12A vorangegangene Datenpaket C11A wurde bereits von der Kontrollvorrichtung CHECK vor der Weiterleitung auf dem Übertragungsweg TRANS inhaltlich daraufhin überprüft, ob für die in dem Datenpaket C11A transportierte Information und damit für das Datenpaket C11A die Weiterleitung erlaubt war. Das Datenpaket C11A hatte dieser Überprüfung standgehalten und wurde deshalb weitergeleitet. Da also schon das Datenpaket C11A einer solchen inhaltlichen Weiterleitungskontrolle standgehalten hat und die Kontrollvorrichtung CHECK das Datenpaket C12A als zu dem Datenpaket C11A zugehörig erkannt hat, kann die Kontrollvorrichtung CHECK das Datenpaket C12A ohne eine weitere inhaltliche Überprüfung weiterleiten. Somit kann das Steuermittel CPU das Datenpaket C12A wieder aus dem Speichermittel MEM entnehmen und über die Ausgangsschnittstelle SND weiterversenden.

In einer besonders einfachen Form einer inhaltlichen Überprüfung eines Datenpaketes vor der Weiterleitung kann die Kontrollvorrichtung CHECK feststellen, ob das Ziel, für welches das Datenpaket bestimmt ist, überhaupt Datenpakete empfangen darf. Dazu vergleicht die Kontrollvorrichtung CHECK die in dem jeweiligen Datenpaket angegebene Zieladresse mit einer Liste zulässiger Zieladressen, die z.B. in dem Speichermittel MEM abgelegt sein kann, und leitet das Datenpaket nur dann weiter, wenn die Zieladresse in der Liste auffindbar ist. Häufig jedoch ist eine solche einfache Überprüfung nicht ausreichend, so daß die Kontrollvorrichtung CHECK den Inhalt eines Datenpaketes genauer untersuchen und diesen mit weiteren Kriterien vergleichen muß. Wenn das weiterzusendende Datenpaket z.B. eine E-Mail enthält, kann die Kontrollvorrichtung CHECK einen in der E-Mail angegebenen Betreff auswerten und analog zu der bereits beschriebenen Überprüfung der Zieladresse mit einer Liste vergleichen, in der zur Weiterversendung freigegebene Themen eines Betreffs aufgeführt sind. Ebenso kann die Kontrollvorrichtung CHECK mehrere Prüfungen kombinieren, z.B. eine Überprüfung der Zieladresse und zusätzlich eine Überprüfung des Betreffs einer E-Mail. Andere, auch eingehendere Überprüfungen sind ebenfalls möglich, werden aber hier nicht weiter ausgeführt.

Die Kontrollvorrichtung CHECK kann auch eine weitere, in Figur 1 nicht dargestellte Einrichtung mit der vergleichenden Überprüfung beauftragen. Wenn die Kontrollvorrichtung CHECK z.B. in einen Personal Computer eingebaut ist, in dem ein zu einer solchen vergleichenden Überprüfung geeignetes Programmodul vorhanden und ausführbar ist, kann die Kontrollvorrichtung CHECK zu überprüfende Inhalte eines Datenpaketes an dieses Programmodul übergeben. Das Programmodul analysiert dann den Inhalt, z.B. in der oben ausgeführten Weise, und meldet der Kontrollvorrichtung CHECK als Ergebnis der Analyse zurück, ob die Kontrollvorrichtung CHECK das Datenpaket weiterleiten darf oder nicht.

Allein schon anhand des Beispiels der Überprüfung der Datenpakete C11A und C12A durch die Kontrollvorrichtung CHECK wird deutlich, wie vorteilhaft sich die Erfindung auswirkt. Denn nachdem das Datenpaket C11A der Überprüfung standgehalten hat, kann die Kontrollvorrichtung CHECK das Datenpaket C12A unmittelbar nach dessen Zuordnung zu der Paketsequenz des Datenpaketes C11A ohne eine weitere inhaltliche Überprüfung weiterleiten, so daß weder nennenswerter Zeitverzug vor der Weiterleitung entsteht, noch die Kontrollvorrichtung CHECK über ein besonders leistungsfähiges Prüfmittel verfügen muß, z.B. über ein besonders leistungsfähiges Steuermittel CPU, das dafür ausgelegt ist, alle von der Kontrollvorrichtung CHECK vor der Weiterleitung zu prüfenden Datenpakete inhaltlich überprüfen zu können. Außerdem ist es oft nur möglich, das jeweils erste Datenpaket einer Paketsequenz inhaltlich zu prüfen, da nur in diesem ersten Datenpaket ein prüfbarer Inhalt transportiert wird. Wenn z.B. die Paketsequenz C11A, C12A und C13A eine segmentierte E-Mail enthält und der erwähnte Betreff der E-Mail im ersten Datenpaket, dem Datenpaket C11A angegeben ist, so kann die Kontrollvorrichtung CHECK diesen Betreff nur anhand des ersten Datenpaketes C11A überprüfen und damit die Weiterleitungsentscheidung für die gesamte Paketsequenz C11A, C12A und C13A treffen.

In Figur 1 ist weiterhin die zweite Paketsequenz C21A, C22A und C23A mit einer Kanalkennung CH2 des zweiten Übertragungskanals dargestellt. Das Datenpaket C21A wurde von der Kontrollvorrichtung CHECK bereits hinsichtlich der Weiterleitung überprüft. Da der Inhalt des Datenpaketes C21A der Überprüfung nicht standgehalten hat, wurde das Datenpaket C21A von der Kontrollvorrichtung CHECK nicht weitergeleitet sondern aus dem Strom der Datenpakete auf dem Übertragungsweg TRANS entfernt und zurückgewiesen. Außerdem hat sich die Kontrollvorrichtung CHECK einen entsprechenden Vermerk in das Speichermittel MEM geschrieben, mit dem das Zurückweisen des Datenpaketes C21A gespeichert wird. Der Vorgang des Zurückweisens ist durch den Pfeil REM verdeutlicht. Wenn die Datenpakete C22A und C23A, die sich noch auf dem Übertragungsweg TRANS in Richtung Kontrollvorrichtung CHECK befinden, die Kontrollvorrichtung CHECK erreicht haben, ordnet die Kontrollvorrichtung CHECK diese Datenpakete zunächst anhand der in den Datenpaketen angegebenen Kanalkennung CH2 der mit dem Datenpaket C21A begonnenen Paketsequenz zu. Da jedoch bereits das Datenpaket C21A von der Kontrollvorrichtung CHECK zurückgewiesen wurde, werden auch die weiteren Datenpakete C22A und C23A derselben Paketsequenz von der Kontrollvorrichtung CHECK zurückgewiesen, wenn die Kontrollvorrichtung CHECK diese Datenpakete empfangen und anschließend der Paketsequenz des Datenpaketes C21A zugeordnet hat. Die Paketsequenz C21A, C22A und C23A kann von der Kontrollvorrichtung CHECK auch gespeichert werden, z.B. in dem Speichermittel MEM, damit z.B. später noch ermittelbar ist, von welcher Datenquelle aus und mit welchen Daten ein unerlaubter Zugang auf das in Figur 1 nicht dargestellte Ziel der Paketsequenz C21A, C22A und C23A versucht wurde.

Ist es jedoch nicht möglich, schon anhand der inhaltlichen Überprüfung des jeweils ersten Datenpaketes einer Paketsequenz die Weiterleitungsberechtigung der gesamten Paketsequenz festzustellen, so kann die Kontrollvorrichtung CHECK dieses erste Datenpaket und erforderlichenfalls auch weitere, noch folgende Datenpakete derselben Paketsequenz in dem Speichermittel MEM solange zwischenspeichern, bis die zu der Überprüfung nötigen Inhalte der Datenpakete für die Kontrollvorrichtung CHECK ausreichend verfügbar sind. Wenn wie in dem obigen Beispiel der in der Paketsequenz C11A, C12A und C13A enthaltenen segmentierten E-Mail der Betreff statt im ersten Datenpaket C11A im zweiten Datenpaket C12A angegeben oder der Betreff auf das erste und das zweite Datenpaket C11A und C12A aufgeteilt ist, so speichert die Kontrollvorrichtung CHECK das erste Datenpaket C11A der Paketsequenz solange, bis sie auch das zweite Datenpaket C12A empfangen hat und der für eine Überprüfung erforderliche Inhalt der Datenpakete insgesamt zur Verfügung steht. Erst wenn die Kontrollvorrichtung CHECK nach Empfang des zweiten Datenpaketes C12A eine Entscheidung zum Weiterleiten getroffen hat, sendet sie das Datenpaket C11A und anschließend das Datenpaket C12A und später das Datenpaket C13A in Richtung DIR weiter. Wenn die Kontrollvorrichtung CHECK statt des Weiterleitens eine Entscheidung zum Zurückweisen der Paketsequenz gefällt hat, weist sie alle Datenpakete dieser Paketsequenz zurück.

Wenn eine vollständige Paketsequenz auf einem der Übertragungskanäle die Kontrollvorrichtung CHECK passiert hat oder von dieser zurückgewiesen wurde, wird jede weitere, von der Kontrollvorrichtung CHECK auf diesem Übertragungskanal empfangene Paketsequenz erneut wieder in der beschriebenen Weise vor der Weiterleitung kontrolliert. In Figur 1 ist das Datenpaket C13A das letzte Datenpaket der ersten Paketsequenz C11A , C12A und C13A. Nach Empfang des Datenpaketes C13A kann die Kontrollvorrichtung CHECK an der Sequenzkennung SEQ1 des Datenpaketes C13A erkennen, daß das Datenpaket C13A das letzte Datenpaket seiner Paketsequenz ist. Nachdem dieses Datenpaket von der Kontrollvorrichtung CHECK empfangen und anschließend - da es zu der weiterzuleitenden ersten Paketsequenz gehört - weitergeleitet worden ist, vermerkt die Kontrollvorrichtung CHECK in ihrem Speichermittel MEM, daß auf dem ersten Übertragungskanal eine Paketsequenz abgeschlossen ist. Wäre anstatt des jeweils letzten Datenpaketes einer Paketsequenz das erste Datenpaket gesondert gekennzeichnet, bräuchte die Kontrollvorrichtung CHECK keinen solchen Vermerk in ihrem Speichermittel MEM eintragen, sondern könnte das jeweils erste Datenpaket als das erste Datenpaket einer Paketsequenz schon anhand dieser nur im jeweils ersten Datenpaket einer Paketsequenz vorhandenen Kennung erkennen. Wenn nun die Kontrollvorrichtung CHECK auf dem ersten Kanal erneut ein Datenpaket empfängt, wird sie dieses Datenpaket als das erste Datenpaket einer neuen Paketsequenz erkennen und dieses Datenpaket vor seiner Weiterleitung inhaltlich kontrollieren. Wenn also das erste Datenpaket C11B der dritten Paketsequenz zu der Kontrollvorrichtung CHECK gelangt, untersucht die Kontrollvorrichtung CHECK dessen Inhalt, das heißt die Kontrollvorrichtung CHECK stellt bereits anhand des Datenpaketes C11B fest, ob für das Datenpaket C11B und für eventuell noch folgende Datenpakete der dritten Paketsequenz die Weiterleitung erlaubt ist. Durch diese erneute inhaltliche Überprüfung einer jeden Paketsequenz wird verhindert, daß nach Weiterleiten einer ersten Paketsequenz oder gar nur eines ersten Datenpaketes auf einem Übertragungskanal alle weiteren Datenpakete oder Paketsequenzen ungeprüft weitergeleitet werden und damit möglicherweise eine unerwünschte Weiterleitung folgender Datenpakete erlaubt wird. Insofern unterscheidet sich die Erfindung von bekannten Paketfiltertechniken, die zunächst feststellen, ob eine durch erste Datenpakete angebahnte Verbindung zwischen zwei Kommunikationspartnern erlaubt ist und dann je nach zuvor festgestelltem Ergebnis alle weiteren Datenpakete zwischen den Kommunikationspartnern inhaltlich ungeprüft weiterleiten oder zurückweisen.

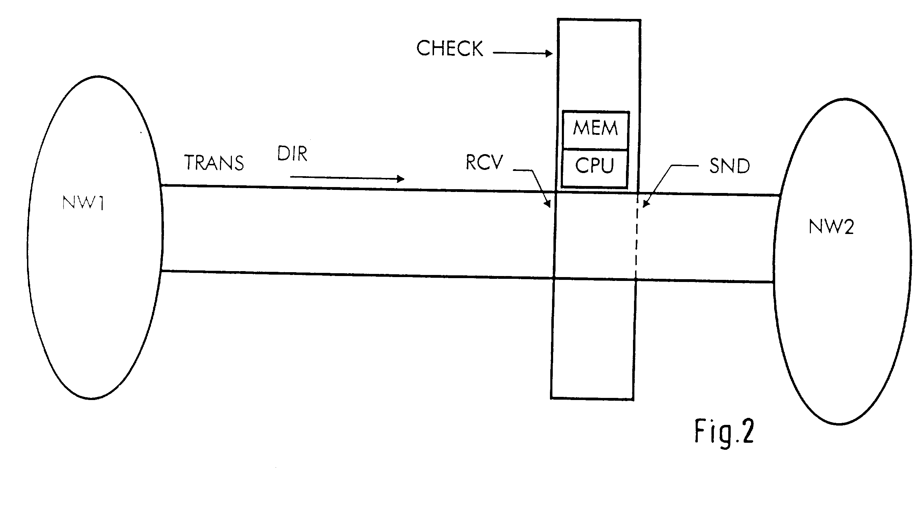

In Figur 2 ist eine Anordnung gezeigt, bei der die Kontrollvorrichtung CHECK eine Schnittstelleneinrichtung zwischen zwei Netzwerken ist. Die Kontrollvorrichtung CHECK kann z.B. in einen Schnittstellen-Server eingebaut sein, der zwischen ein erstes Netzwerk NW1 und ein zweites Netzwerk NW2 geschaltet ist. Der Schnittstellen-Server kontrolliert dann den Datenverkehr auf dem Übertragungsweg TRANS zwischen den Netzwerken NW1 und NW2. In Figur 2 dargestellte Elemente sind mit den gleichen Bezugszeichen versehen wie bereits beschriebene Elemente der Figur 1, soweit die Elemente die gleiche Funktion aufweisen. Der Server verfügt über eine Schnittstelle RCV zu dem Teil des Übertragungsweges TRANS hin, der zu dem Netzwerk NW1 führt, und eine zweite Schnittstelle SND zu dem Teil des Übertragungsweges TRANS hin, der zu dem Netzwerk NW2 führt. Wie das bereits im Zusammenhang mit Figur 1 beschriebene Anschlußmodul eines Personal Computers enthält auch der Server ein Speichermittel MEM und ein Steuermittel CPU, der in dem Speichermittel gespeicherte Programme ausführen kann.

Es kann aber auch in einem Server ein erfindungsgemäßes Softwaremodul eingesetzt werden, der bereits ohnehin über ein Speichermittel MEM, ein Steuermittel CPU, eine Eingangsschnittstelle RCV und eine Ausgangsschnittstelle SND verfügt und wie in Figur 2 gezeigt zwischen zwei Netzwerke NW1 und NW2 geschaltet ist. Ein solches Softwaremodul wird in dem Speichermittel MEM gespeichert und von dem Steuermittel CPU ausgeführt. Zu überprüfende Datenpakete werden von der Eingangsschnittstelle RCV des Servers empfangen und als Eingangsdaten dem auf dem Steuermittel CPU ausgeführten Softwaremodul zugeführt. Das Softwaremodul überprüft das jeweilige Datenpaket in der bereits beschriebenen Weise. Je nach Prüfungsergebnis verwirft das Softwaremodul das Datenpaket oder gibt es als Ausgangsdaten an den Server zur Ausgabe an einer Ausgangsschnittstelle SND des Servers zurück.

Besonders vorteilhaft wirkt sich die Erfindung aus, wenn die von der Kontrollvorrichtung CHECK zu kontrollierenden Datenpakete mit Hilfe eines ersten Protokolles übertragen werden und in den Datenpaketen einer Paketsequenz jeweils eine Nachricht in einem zweiten Protokoll segmentweise transportiert wird. Dies ist z.B. dann der Fall, wenn der Übertragungsweg TRANS eine Datenleitung eines ATM-Netzwerkes ist, die Datenpakete auf dem Übertragungsweg TRANS demnach in einem ATM-Protokoll übertragen werden und in den Datenpaketen einer Paketsequenz jeweils segmentierte Nachrichten enthalten sind, die z.B. mit einem Protokoll aus der Familie der Internet Protokolle (IP) verfaßt sind. Da üblicherweise in sogenannten Local Area Networks (LAN) Nachrichten mit Hilfe von Internet Protokollen übertragen werden und häufig im Weitverkehr, z.B. in Wide Area Networks (WAN), ATM-Netzwerke eingesetzt werden, muß eine IP-Nachricht bei einem Übergang aus dem LAN in das WAN in eine Sequenz aus ATM-Datenpaketen, eine sogenannte ATM-Zellsequenz, aufgeteilt werden, sofern die IP-Nachricht nicht in einer einzigen ATM-Zelle Platz findet. Datenpakete in ATM-Netzwerken werden "Zellen" genannt, weil sie stets die gleiche Größe aufweisen. Gerade deshalb ist es oft erforderlich, IP-Nachrichten, die eine weitgehend frei festlegbare, über den in einer einzelnen ATM-Zelle transportierbaren Nutzdatenanteil hinausgehende Größe haben, jeweils auf mehrere ATM-Zellen von ATM-Zellsequenzen aufzuteilen. Die Kontrollvorrichtung CHECK kann eine ATM-Zelle jeweils anhand einer im Steuerungsteil von ATM-Zellen angegebenen VPI/VCI-Kennung (Virtual Path Identifier / Virtual Channel Identifier) entsprechend der Kanalkennungen CH1 und CH2 in Figur 1 einem Kanal zuordnen. Auf einem Kanal empfangene ATM-Zellen kann die Kontrollvorrichtung CHECK mit Hilfe einer zu der Sequenzkennung SEQ0 und SEQ1 analog verwendeten Sequenzkennung namens ,,AUU" in ATM-Zellsequenzen eingruppieren. Wenn in einer ATM-Zellsequenz eine IP-Nachricht transportiert wird, so ist in der ersten Zelle dieser Sequenz der Steuerungsanteil der IP-Nachricht, der sogenannte IP-Header enthalten. Die Kontrollvorrichtung CHECK kann zumeist bereits durch Untersuchung des in dieser ersten Zelle transportierten IP-Headers entscheiden, ob die ATM-Zellsequenz weitergeleitet werden darf oder nicht. Dazu untersucht die Kontrollvorrichtung CHECK z.B. die in dem IP-Header angegebene Zieladresse, möglicherweise zusätzlich auch eine ebenfalls angegebene Quelladresse und weitere Angaben eines dem IP-Header angefügten TCP-Headers (Transmission Control Protocol) und stellt durch Vergleich mit vorgegebenen, in dem Speichermittel MEM gespeicherten Werten die Weiterleitbarkeit der IP-Nachricht und damit die Weiterleitbarkeit der gesamten ATM-Zellsequenz fest. Nach der Überprüfung dieser ersten Zelle muß die Kontrollvorrichtung CHECK alle weiteren zu der betreffenden ATM-Zellsequenz gehörigen Zellen lediglich dieser Zellsequenz zuordnen und kann diese Zellen je nach Ergebnis der Überprüfung der ersten Zelle weiterleiten oder verwerfen.

Eine ähnliche Aufteilung von Nachrichten auf mehrere Trägertelegramme wie die Aufteilung von IP-Nachrichten auf ATM-Zellsequenzen wird auch bei der Übertragung von Nachrichten zwischen Großrechnern und Terminals vorgenommen, z.B. bei einer Übertragung mit Hilfe von Trägertelegrammen des Großrechner-Protokolles SNA (System Network Architecture), das von Großrechnern der Firma IBM verwendet wird. Auch hier kann die Kontrollvorrichtung CHECK in der beschriebenen effizienten Weise Sequenzen von Trägertelegrammen ermitteln und muß lediglich jeweils das erste Trägertelegramm einer Sequenz vor einer eventuellen Weiterleitung inhaltlich überprüfen.

## Patentansprüche

1. Verfahren zur Weiterleitungskontrolle von Paketen (C11A, C12A, C13A) abgeschlossener Paketsequenzen paketvermittelter Netzwerke, wobei in den Paketen der Paketsequenzen Informationen in Segmenten transportiert werden und wobei zumindest das jeweils erste Paket (C11A) einer Paketsequenz (C11A, C12A, C13A) als der Anfang der Paketsequenz ermittelbar ist, **dadurch gekennzeichnet**, daß die Berechtigung eines jeden Paketes zur Weiterleitung geprüft wird, indem zumindest dann, wenn das jeweilige Paket zum Anfang einer Paketsequenz (C11A, C12A, C13A) gehört, die in diesem Paket transportierte Information zum Vergleich mit mindestens einem vorbestimmten Kriterium herangezogen wird, daß das erste Paket und erforderlichenfalls dem ersten Paket (C11A) folgende Pakete (C12A, C13A) einer Paketsequenz vor der Weiterleitung solange geprüft werden, bis die transportierte Information so vollständig verfügbar ist, daß sie mit dem mindestens einen vorbestimmten Kriterium vergleichbar ist, und daß ein Paket (C11A) einer Paketsequenz nur dann weitergeleitet wird, wenn bei dem Vergleich festgestellt wurde, daß die Weiterleitung für das Paket erlaubt ist oder wenn bereits durch eine Prüfung eines vorangegangenen Paketes derselben Paketsequenz festgestellt worden ist, daß für die Pakete dieser Paketsequenz die Weiterleitung erlaubt ist.

2. Verfahren nach Anspruch 1, dadurch gekennzeichnet, daß die jeweiligen Pakete einer Paketsequenz mit Hilfe eines ersten Protokolles übertragen werden, das einen ersten Steuerungsanteil aufweist, daß in den jeweiligen Paketen segmentweise eine Nachricht in einem zweiten Protokoll mit zumindest einem zweiten Steuerungsanteil transportiert wird, daß die Zugehörigkeit eines jeweiligen Paketes zu einer Paketsequenz durch Auswertung des ersten Steuerungsanteiles des Paketes ermittelt wird und daß dann, wenn die in diesem Paket transportierte Information mit dem mindestens einen vorbestimmten Kriterium verglichen wird, zu dem Vergleich der zweite Steuerungsanteil ausgewertet wird.

3. Verfahren nach Anspruch 1, dadurch gekennzeichnet, daß es auf Pakete eines ATM-Netzwerkes angewendet wird.

4. Verfahren nach Anspruch 1, dadurch gekennzeichnet, daß es auf Pakete eines Internet-Protokolles angewendet wird.

5. Softwaremodul zur Weiterleitungskontrolle von Paketen abgeschlossener Paketsequenzen (C1 1A, C12A, C13A) paketvermittelter Netzwerke, wobei in den Paketen der Paketsequenzen Informationen in Segmenten transportiert werden und wobei zumindest das jeweils erste Paket (C11A) einer Paketsequenz (C11A, C12A, C13A) als der Anfang der Paketsequenz ermittelbar ist, **dadurch gekennzeichnet**, daß das Softwaremodul Mittel aufweist, die Berechtigung eines jeden Paketes zur Weiterleitung zu prüfen, indem zumindest dann, wenn das jeweilige Paket zum Anfang einer Paketsequenz (C11A, C12A, C13A) gehört, die in diesem Paket transportierte Information zum Vergleich mit mindestens einem vorbestimmten Kriterium herangezogen wird, daß das Softwaremodul Mittel aufweist, das erste Paket (C11A) und erforderlichenfalls dem ersten Paket folgende Pakete (C12A, C13A) einer Paketsequenz vor der Weiterleitung solange zu prüfen, bis die transportierte Information so vollständig verfügbar ist, daß sie mit dem mindestens einen vorbestimmten Kriterium vergleichbar ist, und daß das Softwaremodul Mittel aufweist, um ein Paket (C11A) einer Paketsequenz dann weiterzuleiten, wenn bei dem Vergleich festgestellt wurde, daß die Weiterleitung für das Paket erlaubt ist oder wenn bereits durch eine Prüfung eines vorangegangenen Paketes derselben Paketsequenz festgestellt worden ist, daß für die Pakete dieser Paketsequenz die Weiterleitung erlaubt ist.

6. Schnittstelleneinrichtung zur Weiterleitungskontrolle von Paketen abgeschlossener Paketsequenzen (C11A, C12A, C13A) paketvermittelter Netzwerke, wobei in den Paketen der Paketsequenzen Informationen in Segmenten transportiert werden und wobei zumindest das jeweils erste Paket (C11A) einer Paketsequenz (C11A, C12A, C13A) als der Anfang der Paketsequenz ermittelbar ist, **dadurch gekennzeichnet**, daß die Schnittstelleneinrichtung Mittel aufweist, die Berechtigung eines jeden Paketes zur Weiterleitung zu prüfen, indem zumindest dann, wenn das jeweilige Paket zum Anfang einer Paketsequenz (C11A, C12A, C13A) gehört, die in diesem Paket transportierte Information zum Vergleich mit mindestens einem vorbestimmten Kriterium herangezogen wird, daß die Schnittstelleneinrichtung Mittel aufweist, das erste Paket (C11A) und erforderlichenfalls dem ersten Paket folgende Pakete (C12A, C13A) einer Paketsequenz vor der Weiterleitung solange zu prüfen, bis die transportierte Information so vollständig verfügbar ist, daß sie mit dem mindestens einen vorbestimmten Kriterium vergleichbar ist, und daß die Schnittstelleneinrichtung Mittel aufweist, um ein Paket (C11A) einer Paketsequenz dann weiterzuleiten, wenn bei dem Vergleich festgestellt wurde, daß die Weiterleitung für das Paket erlaubt ist oder wenn bereits durch eine Prüfung eines vorangegangenen Paketes derselben Paketsequenz festgestellt worden ist, daß für die Pakete dieser Paketsequenz die Weiterleitung erlaubt ist.

7. Endgerät zur Weiterleitungskontrolle von Paketen abgeschlossener Paketsequenzen (C11A, C12A, C13A) paketvermittelter Netzwerke, wobei in den Paketen der Paketsequenzen Informationen in Segmenten transportiert werden und wobei zumindest das jeweils erste Paket (C11A) einer Paketsequenz (C11A, C12A, C13A) als der Anfang der Paketsequenz ermittelbar ist, **dadurch gekennzeichnet**, daß das Endgerät Mittel aufweist, die Berechtigung eines jeden Paketes zur Weiterleitung zu prüfen, indem zumindest dann, wenn das jeweilige Paket zum Anfang einer Paketsequenz (C11A, C12A, C13A) gehört, die in diesem Paket transportierte Information zum Vergleich mit mindestens einem vorbestimmten Kriterium herangezogen wird, daß das Endgerät Mittel aufweist, das erste Paket (C11A) und erforderlichenfalls dem ersten Paket folgende Pakete (C12A, C13A) einer Paketsequenz vor der Weiterleitung solange zu prüfen, bis die transportierte Information so vollständig verfügbar ist, daß sie mit dem mindestens einen vorbestimmten Kriterium vergleichbar ist, und daß das Endgerät Mittel aufweist, um ein Paket (C11A) einer Paketsequenz dann weiterzuleiten, wenn bei dem Vergleich festgestellt wurde, daß die Weiterleitung für das Paket erlaubt ist oder wenn bereits durch eine Prüfung eines vorangegangenen Paketes derselben Paketsequenz festgestellt worden ist, daß für die Pakete dieser Paketsequenz die Weiterleitung erlaubt ist.

8. Server zur Weiterleitungskontrolle von Paketen abgeschlossener Paketsequenzen (C11A, C12A, C13A) paketvermittelter Netzwerke, wobei in den Paketen der Paketsequenzen Informationen in Segmenten transportiert werden und wobei zumindest das jeweils erste Paket (C11A) einer Paketsequenz (C11A, C12A, C13A) als der Anfang der Paketsequenz ermittelbar ist, **dadurch gekennzeichnet**, daß der Server Mittel aufweist, die Berechtigung eines jeden Paketes zur Weiterleitung zu prüfen, indem zumindest dann, wenn das jeweilige Paket zum Anfang einer Paketsequenz (C11A, C12A, C13A) gehört, die in diesem Paket transportierte Information zum Vergleich mit mindestens einem vorbestimmten Kriterium herangezogen wird, daß der Server Mittel aufweist, das erste Paket (C11A) und erforderlichenfalls dem ersten Paket folgende Pakete (C12A, C13A) einer Paketsequenz vor der Weiterleitung solange zu prüfen, bis die transportierte Information so vollständig verfügbar ist, daß sie mit dem mindestens einen vorbestimmten Kriterium vergleichbar ist, und daß der Server Mittel aufweist, um ein Paket (C11A) einer Paketsequenz dann weiterzuleiten, wenn bei dem Vergleich festgestellt wurde, daß die Weiterleitung für das Paket erlaubt ist oder wenn bereits durch eine Prüfung eines vorangegangenen Paketes derselben Paketsequenz festgestellt worden ist, daß für die Pakete dieser Paketsequenz die Weiterleitung erlaubt ist.
